Europäisches Patentamt

European Patent Office

Office européen des brevets

(19)

(11) Veröffentlichungsnummer: **0 175 981**
**B1**

(12) **EUROPÄISCHE PATENTSCHRIFT**

(45) Veröffentlichungstag der Patentschrift: **16.08.90**

(51) Int. Cl.⁵: **B 60 R 13/06**

(21) Anmeldenummer: **85111235.9**

(22) Anmeldetag: **05.09.85**

(54) **Verfahren zum Einsetzen eines Kraftfahrzeugfensters in die Zarge einer Kraftfahrzeugkarosserie und für das erfindungsgemässe Verfahren geeignete Fenster.**

(30) Priorität: **15.09.84 DE 3434026**

(43) Veröffentlichungstag der Anmeldung:
**02.04.86 Patentblatt 86/14**

(45) Bekanntmachung des Hinweises auf die
Patenterteilung:
**16.08.90 Patentblatt 90/33**

(84) Benannte Vertragsstaaten:
**AT BE DE FR GB IT LU NL SE**

(56) Entgegenhaltungen:
**EP-A-0 128 837**
**CA-A- 879 910**
**US-A-3 655 854**
**US-A-3 756 881**
**US-A-4 115 609**

(73) Patentinhaber: **FLACHGLAS
AKTIENGESELLSCHAFT**
**Otto-Seeling-Promenade 10-14**
**D-8510 Fürth (DE)**

(72) Erfinder: **Armbruster, Günter**
**Heiderweg 35**
**D-4000 Düsseldorf 31 (DE)**

(74) Vertreter: **Andrejewski, Walter et al**
**Patentanwälte Andrejewski, Honke & Partner**
**Postfach 10 02 54 Theaterplatz 3**
**D-4300 Essen 1 (DE)**

EP 0 175 981 B1

Courier Press, Leamington Spa, England.

Beschreibung

Die Erfindung betrifft ein Verfahren zum Einsetzen eines Kraftfahrzeugfensters aus Fensterscheibe und damit verbundenen, verformbaren Fensterrahmen in eine zugeordnete Zarge, die in die Kraftfahrzeugkarosserie eingeformt ist und Zargenformausbildungen aufweist. Die Erfindung betrifft fernerhin Fenster, die zur Durchführung eines solchen Verfahrens besonders geeignet sind.—Die Zargenformausbildungen besitzen zumindest ein mehr oder weniger Z-förmiges Profil mit einem Auflagerflansch für das Fenster, einem Begrenzungssteg und einem in die Karosserieoberfläche einmündenden Übergangsteilstück.

Bei dem bekannten gattungsgemäßen Verfahren (DE—C—31 34 340) ist das wesentliche Bauteil des Fensterrahmens eine metallische Einlage, die in Kunststoff oder dergleichen eingebettet ist. Die Anpassung des Fensterrahmens an die Zargenformausbildungen erfolgt durch Verformung der metallischen Einlage. Dazu wird das gesamte Fenster in ein besonderes Formwerkzeug aus Matrize und Patrize eingebracht sowie auf diese Weise durch mechanische Verformung der metallischen Einlage die Anpassungsformgebung durchgeführt. Das ist aufwendig, weil die Anpassungsformgebung in Rahmen einer automatischen Montage eines Kraftfahrzeugfensters einen besonderen, vorbereiteten Arbeitsgang darstellt, der Zeit benötigt und Kosten verursacht. Das ist aber auch in funktioneller Hinsicht nachteilig, weil nicht vermieden werden kann, daß bei der mechanischen Anpassungsformgebung in dem besonderen Formwerkzeug Toleranzen auftreten, die sich mit unvermeidbaren Toleranzen der Zargenformausbildungen addieren, so daß Toleranzspalte oder Toleranzüberdeckungen in Kauf genommen werden müssen. Toleranzspalte können Undichtigkeiten bewirken. Das Auftreten von Toleranzspulen dürfte der Grund sein, weshalb in Rahmen der bekannten Maßnahmen nach dem Einkleben des Fensterrahmens in die Zarge besondere Dichtungsleisten eingesetzt und eingeklebt werden. Das ist ein weiterer aufwendiger Arbeitsgang.

Bei einem ähnlichen Verfahren zum Einsetzen eines Kraftfahrzeugfensters aus Fensterscheibe und damit verbundenem, verformbaren Fensterrahmen in eine zugeordnete Zarge, die in die Kraftfahrzeugkarosserie eingeformt ist und Zargenformausbildungen aufweist, (vorgeschlagen worden) EP 01 28 837 A 1) Stand der Technik, gemäß Artikel 54 (3) EPÜ, mit einem aus zwei verschiedenen Kunststoffen bestehenden Rahmen zu arbeiten, der mit der Fensterscheibe verbunden ist. Zum Anschlagflansch der Zargenformansbildung hin ist der Rahmen aus thermoplastischen Kunststoff aufgebaut, der durch einen eingebetteten Heizwiderstand elektrisch beheizbar und durch die Beheizung plastifizierbar ist sowie in diesem Zustand als Kleber wirkt. In diesem Zustand kann der Rahmen gegen den Boden der Zargenformausbildung angedrückt und der plastifizierte Bereich des Rahmens verformt werden. Dabei entsteht die Klebeverbindung. Der andere Bereich des Rahmans besteht aus einem weich eingestellten Kunststoff mit angeformten Anpassungselementen, die in montierten Zustand des Fensterrahmens an den Seiten der Zargenformausbildung anliegen. Eine vollständige plastische Adaptation des Fensterrahmens an die Zarge erfolgt nicht, was Undichtigkeiten bewirken kann. Der Aufbau des Fensterrahmens aus zwei verschiedenen Werkstoffen und die Integration der Beheizungseinrichtung machen die bekannte Ausführungsform aufwendig.

Der Erfindung liegt die Aufgabe zugrunde, das eingangs beschriebene Verfahren so zu führen, daß das Fenster mit genauer Anpassung an die Zargenformausbildungen in die Zarge toleranzfrei eingesetzt und gleichzeitig auch eingeklebt werden kann, ohne daß zusätzliche abdichtende Maßnahmen erforderlich sind, und ohne daß vorbereitende formgebende Maßnahmen eingerichtet werden müssen.

Zur Lösung dieser Aufgabe lehrt die Erfindung ein Verfahren zum Einsetzen eines Kraftfahrzeugfensters aus Fensterscheibe und damit verbundenem, verformbarem Fensterrahmen in eine zugeordnete Zrage, die in die Kraftfahrzeugkarosserie eingeformt ist und Zargenformausbildungen aufweist, wobei

ein mit der Fensterscheibe verbundener und mit einem Kleber versehener Rahmen aus thermoplastischem Kunststoff erwärmt und dadurch plastifiziert und in die Zarge eingedrückt wird,

der Rahmen dabei entsprechend den Zargenformausbildungen als formgebanden Elementen adaptiert wird,

durch Abkühlung nach den Eindrückten in die Zarge die Anpassung das Rahmens an die Zargenform fixiert und der adaptierte Fensterrahmen mit Hilfe seines Klebers in die Zarge passend eingeklebt wird.

Zur Lösung der angegebenen Aufgabe lehrt die Erfindung außerdem ein Verfahren zum Einsetzen eines Kraftfahrzeugfensters aus Fensterscheibe, damit verbundenem, verformbarem Fensterrahmen in eine zugeordnete Zarge, die in die Kraftfahrzeugkarosserie eingeformt ist und Zargenformausbildungen aufweist, wobei

ein mit der Fensterscheibe verbundener Rahmen aus Gummi oder Kunststoff, der durch Anwendung von Wärme ausvulkanisierbar bzw. auspolymerisierbar ist, erwärmt und in die Zarge eingedrückt wird,

der Rahmen dabei entsprechend den Zargenformausbildungen als formgebenden Elementen adaptiert wird,

der Rahmen durch Ausvulkanisieren bzw. Auspolymerisieren in der durch das Eindrücken in die Zarge herbeigeführten Anpassung fixiert sowie mit Hilfe seines Klebers in die Zarge passend eingeklebt wird.—Der Ausdurck polymerisierbar umfaßt im Rahmen der Erfindung auch Vorgänge wie Polykondensation oder Polyaddition.

Grundsätzlich ist es bei der Montage von Kraftfahrzeugfenstern bekannt (US—A—41 15 609), zwischen einer Fensterscheibe und der Zarge einen selbstklebenden Dichtungsstreifen in einem ersten Arbeitsgang anzuordnen. Er wird in die Zarge eingeformt. Danach wird die Fensterscheibe aufgeklebt. Diese Maßnahmen sind ebenfalls aufwendig und machen zusätzliche Bauteile für den Abschluß erforderlich, den bei den gattungsgemäßen Maßnahmen der Fensterrahmen übernimmt.

Nach einer bevorzugten Ausführungsform der Erfindung, der besondere Bedeutung zukommt, werden der Fensterrahmen und/oder die Zargenformausbildungen—vor dem Einsetzen des Fensters—mit einem thermisch aktivierbaren Kleber versehen und wird dieser durch die im Zusammenhang mit dem Eindrücken des Fensters in die Zarge aufgebrachte Wärme aktiviert. Man kann aber auch den Fensterrahmen und/oder die Zargenformausbildungen vor dem Einsetzen des Fensters mit einem Kontaktkleber versehen, wobei dieser mit dem Eindrücken des Fensters in die Zarge aktiviert wird.

Die erreichten Vorteile sind darin zu sehen, daß bei den erfindungsgemäßen Verfahren ein besonderer Arbeitsgang zur Anpassungsformgebung des Fensterrahmens an die Zargenformausbildungen nicht mehr erforderlich ist. Auch entsprechende Formwerkzeuge werden nicht benötigt. Die Erfindung beruht insoweit auf der Erkenntnis, daß die Zarge mit ihren Zargenformausbildungen selbst als Formwerkzeug funktionieren kann, was darüber hinaus zu einer beachtlichen Verbesserung führt, weil der Fensterrahmen toleranzfrei in die Zarge eingesetzt wird. Im gleichen Arbeitsgang wird auch das Einkleben vorgenommen.—Kleber, mit denen im Rahmen des erfindungsgemäßen Verfahrens gearbeitet werden können, sowie die entsprechenden klebetechnischen Maßnahmen, sind vielfach bekannt. Nur beispielsweise werden genannt: Zumischung eines thermisch oder chemisch aktivierbaren Klebers in den Fensterrahmen, Beschichtung des Rahmens mit einem Kleber, beispielsweise einem Heißschmelzkleber. Bewährt haben sich Kleber auf der Basis der Methylmethacrylate, Polyamide, Polyurethane oder Epoxide, wobei mit üblichen Aktivierungsmitteln gearbeitet wird, oder Heißschmelzkleber aus der Gruppe der Styrolbutadiene, Ethylen-Vinyl-Acetate, Polyamide, Polyaminoamide oder Copolymere dazu.

Gegenstand der Erfindung sind auch Fenster für die Durchführung des Verfahrens. Diese Fenster sind Gegenstand der Patentansprüche 6 bis 9.

Im folgenden wird die Erfindung anhand einer lediglich ein Ausführungsbeispiel darstellenden Zeichnung ausführlicher erläutert. Es zeigen

Fig. 1 die Ansicht eines Fensters zur Durchführung des erfindungsgemäßen Verfahrens,

Fig. 2 in gegenüber der Fig. 1 wesentlich vergrößertem Maßstab einen Schnitt in Richtung A-A durch den Gegenstand nach Fig. 1 und

Fig. 3 den Ausschnitt der Fig. 2 im eingesetzten Zustand.

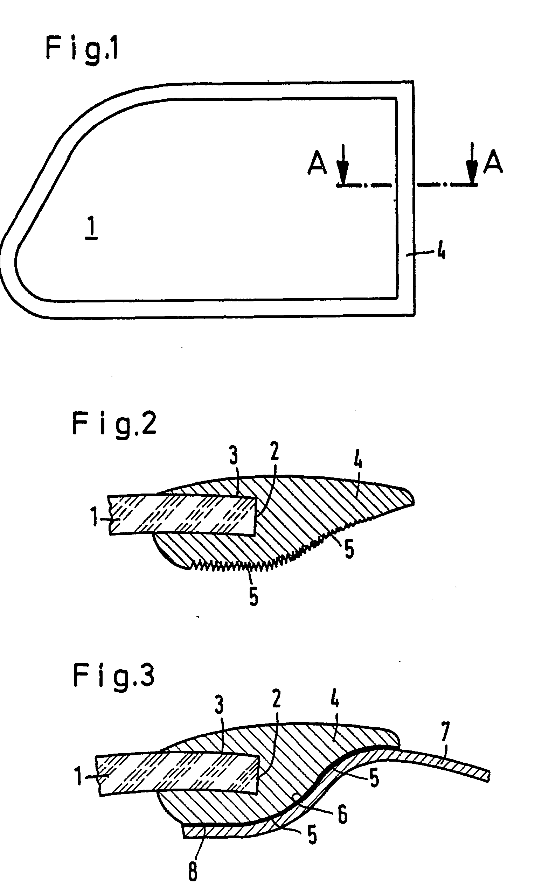

Das in dem Figuren dargestellte Fenster besteht aus einer Fensterscheibe 1 und einem auf den Fensterscheibenrand 2 mit einer Aufnahmenut 3 aufgesetzten Fensterrahmen 4. In Ausführungsbeispiel mag der Fensterrahmen 4 aus einem thermoplastischen Kunststoff aufgebaut sein. Er ist im Ausführungsbeispiel einlagenfrei. Er besitzt im übrigen Anpassungselemente 5 zur Anpassung an die Zargenformausbildungen 6. Zumindest die Anpassungselemente 5 sind durch Wärme plastifizierbar und durch Eindrücken in die Zarge 7 im plastifizierten Zustand an die Zargenformausbildungen 6 anpaßbar. Durch Abküling ist diese Anpassungsform fixierbar. Insoweit wird auf eine vergleichende Betrachtung der Fig. 2 und 3 verwiesen. Das Fenster erlaubt ein Verfahren, welches dadurch gekennzeichnet ist, daß der Fensterrahmen 4 unter Anwendung von Druck und Wärme an den Zargenformausbildungen 6 selbst als formgebendes Element eben den Zargenformausbildungen 6 angepaßt werden kann, wozu er lediglich in die Zarge 7 einzudrücken ist und wobei im gleichen Arbeitsgang auch das Einkleben in die Zarge 7 erfolgt.

In den Figuren könnte der Fensterrahmen 4 auch aus einem zumindest teilweise ausvulkanisierbaren und dadurch erhärtbaren Elastomer aufgebaut sein, wobei der Fensterrahmen 4 nach wie vor die beschriebenen Anpassungselemente 5 aufweist, und wobei zumindest die Anpassungselemente 5 durch Wärme ausvulkanisierbar sowie dadurch an eine durch Eindrücken in die Zarge 7 erfolgte Anpassung fixierbar sind. Der Fensterrahmen 4 mag an die Fensterscheibe 1 angespritzt sein, er könnte aber auch vorgeformt, auf den Fensterscheibenrand 2 aufgesetzt und dort aufgeklebt sein. Die Anpassungselemente 5 sind im allgemeinen, wie beschrieben, mit einem Kleber 8 ausgerüstet.

**Patentansprüche**

1. Verfahren zum Einsetzen eines Kraftfahrzeugfensters aus Fensterscheibe (1) und damit verbundenem, verformbarem Fensterrahmen (4) in eine zugeordnete Zarge, die in die Kraftfahrzeugkarosserie eingeformt ist und Zargenformausbildungen (5) aufweist, wobei

ein mit der Fensterscheibe (1) verbundener und mit einem Kleber (8) versehener Rahmen (4) aus thermoplastischen Kunststoff erwärmt und dadurch plastifiziert und in die Zarge eingedrückt wird,

der Rahmen (4) dabei entsprechend den Zargenformausbildungen (5) als formgebenden Elementen adaptiert wird,

durch Abkühlung nach den Eindrücken in die Zarge die Anpassung des Rahmens (4) an die Zargenform (4) fixiert und der adaptierte Fensterrahmen mit Hilfe seines Klebers (8) in die Zarge passend eingeklebt wird.

2. Verfahren zum Einsetzen eines Kraftfahrzeugfensters aus Fensterscheibe (1) und damit verbundenem, verformbarem Fensterrahmen (4) in eine zugeordnete Zarge, die in die Kraftfahrzeugkarosserie eingeformt ist und Zargenformausbildungen (5) aufweist, wobei

eine mit der Fensterscheibe (1) verbundener Rahmen (4) aus Gummi oder Kunststoff, der durch Anwendung von Wärme ausvulkanisierbar bzw. auspolymerisierbar ist, erwärmt und in die Zarge eingedrückt wird,

der Rahmen (4) dabei entsprechend den Zargenformausbildungen (5) als formgebenden Elementen adaptiert wird,

der Rahmen (4) durch Ausvulkanisieren bzw. Auspolymerisieren in der durch das Eindrücken in die Zarge herbeigeführten Anpassung fixiert sowie mit Hilfe seines Klebers (8) in die Zarge passend eingeklebt wird.

3. Verfahren nach einem der Ansprüche 1 oder 2, wobei der Fensterrahmen (4) und/oder die Zargenformausbildungen (5) vor dem Einsetzen des Fensters mit einem thermisch aktivierbaren Kleber (8) versehen werden und dieser durch die im Zusammenhang mit dem Eindrücken des Fensters in die Zarge aufgebrachte Wärme aktiviert wird.

4. Verfahren nach einem der Ansprüche 1 bis 3, wobei der Fensterrahmen (4) und/oder die Zargenformausbildungen (5) vor dem Einsetzen des Fensters mit einem Kontaktleber (8) versehen werden und dieser vor dem Eindrücken des Fensters in die Zarge oder beim Eindrücken des Fensters in die Zarge aktiviert wird.

5. Fenster für die Durchführung des Verfahrens nach einem der Ansprüche 1 bis 4 mit Fensterscheibe (1) und auf den Fensterscheibenrand (2) mit einer Aufnahmenut (3) aufgesetztem Fensterrahmen (4), dadurch gekennzeichnet, daß der Fensterrahmen (4) zumindest teilweise aus einem thermoplastischen Kunststoff aufgebaut ist, daß der Fensterrahmen (4) Anpassungselemente (5) zur Anpassung an die Zargenformausbildungen (6) aufweist, daß zumindest die Anpassungselemente (5) durch Wärme plastifizierbar sowie durch Eindrücken in die Zarge (7) in plastifizierten Zustand an die Zargenformausbildungen (6) anpaßbar sind und daß durch Abkühlung die Anpassung fixierbar ist.

6. Fenster für die Durchführung des Verfahrens nach einem der Ansprüche 1 bis 4 mit Fensterscheibe und auf den Fensterscheibenrand mit einer Aufnahmenut aufgesetztem Fensterrahmen, dadurch gekennzeichnet, daß der Fensterrahmen (4) zumindest teilweise aus einem zumindest teilweise ausvulkanisierbaren und dadurch erhärtbaren Elastomer aufgebaut ist, daß der Fensterrahmen (4) Anpassungselemente (5) zur Anpassung an die Zargenformausbildungen (6) aufweist und daß zumindest die Anpassungselemente (5) durch Wärme ausvulkanisierbar sowie dadurch an eine durch Eindrükken in die Zarge (7) erfolgte Anpassung fixierbar sind.

7. Fenster nach einem der Ansprüche 5 oder 6, dadurch gekennzeichnet, daß der Fensterrahmen (4) an die Fensterscheibe (1) angespritzt ist.

8. Fenster nach einem der Ansprüche 5 bis 7, dadurch gekennzeichnet, daß der Fensterrahmen (4) vorgeformt und auf die Fensterscheibe (1) mit der Aufnahmenut (3) aufgesetzt und mittels Klebverbindung befestigt ist.

9. Fenster nach einem der Ansprüche 5 bis 8, dadurch gekennzeichnet, daß die Anpassungselemente (5) mit einem Kleber (8) ausgerüstet sind.

## Revendications

1. Procédé de montage d'une fenêtre de véhicule automobile composée d'une vitre (1) et d'un châssis de fenêtre (4) déformable relié à celle-ci dans une baie associée conformée dans la carrosserie du véhicule automobile et présentant des éléments adaptés à la forme du cadre (6), qui consiste en ce

qu'un châssis (4) en matière thermoplastique relié à la vitre (1) et muni d'une colle (8) est chauffé et de ce fait plastifié et enfoncé dans la baie,

que le châssis (4) est alors adapté conformément aux éléments adaptés à la forme du cadre (6) en tant qu'élément de façonnage,

que, par refroidissement après l'enfoncement dans le cadre, l'adaptation du châssis (4) à la forme du chadre (6) est fixée et que le châssis de fenêtre adapté est collé de manière ajustée dans le cadre à l'aide de sa colle (8).

2. Procédé de montage d'une fenêtre de véhicule automobile composée d'une vitre (1) et d'un châssis de fenêtre (4) déformable reliée à celle-ci dans une baie associée conformée dans la carrosserie du véhicule automobile et présentant des éléments adaptés à la forme du cadre (6), qui consiste en ce

qu'un châssis (4) en caoutchouc ou en matière plastique relié à la vitre (1) et vulcanisable et respectivement polymérisable par application de chaleur est chauffé et enfoncé dans la baie,

que le châssis (4) est alors adapté conformément aux éléments adaptés à la forme du cadre (6) en tant qu'éléments de façonnage,

que le châssis (4) est fixé, par vulcanisation et respectivement par polymérisation, dans l'adaptation réalisée par l'enfoncement dans la baie, et collé de manière ajustée dans le cadre à l'aide de sa colle (8).

3. Procédé selon l'une des revendications 1 ou 2, consistant en ce que le châssis de fenêtre (4) et/ou les éléments adaptés à la forme du cadre (6) sont munis, avant le montage de la fenêtre, d'une colle (8) pouvant être activée thermiquement et que ladite colle est activée par la chaleur dégagée en relation avec l'enfoncement de la fenêtre dans le cadre.

4. Procédé selon l'une quelconque des revendications 1 à 3, consistant en ce que le châssis de fenêtre (4) et/ou les éléments adaptés à la forme du cadre (6) sont munis, avant le montage de la fenêtre, d'une colle de contact (8) et que ladite colle est activée avant l'enfoncement de la fenêtre dans le cadre ou lors de l'enfoncement de la fenêtre dans ledit cadre.

5. Fenêtre pour la mise en oeuvre du procédé selon l'une quelconque des revendications 1 à 4, comprenant une vitre (1) et un châssis de fenêtre (4) posé avec une rainure de réception (3) sur le bord (2) de la vitre, caractérisée par le fait que le châssis de fenêtre (4) est constitué du moins partiellement d'une matière thermoplastique; que le châssis de fenêtre (4) comporte des éléments d'adaptation (5) pour l'adaptation aux éléments adaptés à la forme du cadre (6); qu'aux moins les éléments d'adaptation (5) peuvent être plastifiés par application de chaleur et adaptés à l'état plastifié aux éléments adaptés à la forme du cadre (6) par enfoncement dans le cadre (7); et que l'adaptation peut être fixée par refroidissement.

6. Fenêtre pour la mise en oeuvre du procédé selon l'une quelconque des revendications 1 à 4, comprenant une vitre et un châssis de fenêtre posé avec une rainure de réception sur le bord de la vitre, caractérisée par le fait que le châssis de fenêtre (4) est constitué d'un élastomère vulcanisable du moins en partie et de ce fait durcissable; que le châssis de fenêtre (4) comprend des éléments d'adaptation (5) pour l'adaptation aux éléments adaptés à la forme du cadre (6); et qu'au moins les éléments d'adaptation (5) peuvent être vulcanisés par application de chaleur et fixés ainsi sur une adaptation réalisée par l'enfoncement dans le cadre (7).

7. Fenêtre selon l'une des revendications 5 ou 6, caractérisée par le fait que le châssis de fenêtre (4) est moulé par injection sur la vitre (1).

8. Fenêtre selon l'une quelconque des revendications 5 à 7, caractérisée par le fait que le châssis de fenêtre (4) est préformé, déposé avec la rainure de réception (3) sur la vitre (1) et fixé par collage.

9. Fenêtre selon l'une quelconque des revendications 5 à 8, caractérisée par le fait que les éléments d'adaptation (5) sont pourvus d'une colle (8).

**Claims**

1. A process for the insertion of an automobile window consisting of a window pane (1) and a deformable window frame (4) united therewith into an associated frame surround that is formed in the automobile bodywork and possesses frame surround formations (6) in which:
a frame (4) of synthetic thermoplastic material united to the window pane (1) and provided with an adhesive (8) is heated and thereby plasticized and is pressed into the frame surround,
the frame (4) is thereby modified, in accordance with the frame surround formations (6) which act as moulding units,
by cooling after pressing into the frame surround the matching of the frame (4) to the shape of the frame surround formations (6) becomes permanent and the modified window frame is glued and fitted into the frame surround by means of its adhesive (8).

2. A process for the insertion of an automobile window consisting of a window pane (1) and a deformable window frame (4) united therewith into an associated frame surround that is formed in the automobile bodywork and possesses frame surround formations (6) in which:
a frame 4 of rubber or plastics united to the window pane (1) and capable of being vulcanized or polymerized by the application of heat is heated and pressed into the frame surround,
the frame 4 is thereby modified, in accordance with the frame surround formations (6) which act as moulding units,
the frame (4) is fixed by vulcanization or polymerization with the matching brought about by pressing into the frame surround and is glued and fitted into a frame surround by means of its adhesive (8).

3. A process according to one of Claims 1 or 2, in which the window frame (4) and/or the frame surround formations (6) are provided with a heat-activatable adhesive (8) before the insertion of the window and this adhesive is activated by the heat applied in connection with the pressing of the window into the frame surround.

4. A process according to one of Claims 1 to 3, in which the window frame (4) and/or the frame surround formations (6) are provided with a contact adhesive before the insertion of the window and this contact adhesive is activated before the pressing of the window into the frame surround or during the pressing of the window into the frame surround.

5. A window for the performance of the process according to one of Claims 1 to 4 with a window pane (1) and a window frame (4) mounted on to the edge (2) of the window pane with a reception groove (3), characterized in that the window frame (4) is at least partially constructed of a synthetic thermoplastic material, that the window frame (4) possesses adaptation units (5) for adaptation to the frame surround formations (6), that at least the adaptation units (5) can be plasticized by heat and can be made to adapt themselves to the frame surround formations (6) by pressing into the frame surround (7) when in the plasticized state and that the adaptation can be permanently fixed by cooling.

6. A window for the performance of the process according to one of Claims 1 to 4 with a window pane (1) and a window frame (4) mounted on to the edge (2) of the window pane with a reception groove (3), characterized in that the window frame (4) is at least partially constructed of an at least partially vulcanizable and thereby hardenable elastomer, that the window frame (4) possesses adaptation units (5) for adaptation to the frame surround formations (6) and that at least the adaptation units (5) are vulcanizable by heat and thereby can be fixed with an adaptation resulting from pressing into the frame surround (7).

7. A window according to one of Claims 5 or 6, characterized in that the window frame (4) is sprayed on to the window pane (1).

8. A window according to one of Claims 5 to 7 characterized in that the window frame (4) is preformed and is mounted on the window pane (1) by the reception groove (3) and fastened by means of an adhesive joint.

9. A window according to one of Claims 5 to 8, characterized in that the adaptation units (5) are equipped with an adhesive layer (8).

Fig.1

Fig.2

Fig.3